# EUROPEAN PATENT SPECIFICATION

(11) **EP 3 147 092 B1**
(45) Date of publication and mention of the grant of the patent: **26.06.2019**
(21) Application number: 16189950.5
(22) Date of filing: 21.09.2016
(51) Int. Cl.: B27M 3/00, B27D 1/10, B32B 21/13, B27L 5/00

(54) **PROCESS FOR PRODUCING END-GRAINED WOOD VENEER EDGE BANDING AND SUCH END-GRAINED WOOD VENEER EDGE BANDING**
VERFAHREN ZUR HERSTELLUNG EINER HIRNHOLZKANTE UND HIRNHOLZKANTE
PROCÉDÉ DE PRODUCTION D'UNE BORDURE DE PANNEAU EN BOIS DE BOUT ET PANNEAU EN BOIS DE BOUT

(30) Priority: 28.09.2015 IT UB20153947
(43) Date of publication of application: 29.03.2017
(73) Proprietor: River Lab S.r.l., 31053 Pieve di Soligo (TO) (IT)
(72) Inventor: BACCINI, Pio Ugo, 31015 Conegliano (IT)
(74) Representative: Cercenà, Alice

(56) References cited:
- EP-A1- 2 551 511
- DE-A1-102011 050 874
- DE-C- 229 184
- DE-C1- 19 545 971
- DE-U1- 9 213 183
- GB-A- 684 092
- IT-A1- PN20 120 037
- JP-A- 2013 188 979
- US-A- 1 931 650
- US-A- 5 277 953
- US-A- 5 662 760
- POLYKARP SCHNELL: "HIRNHOLZKANTEN", , Retrieved from the Internet: URL:http://www.polykarp.de/furnierkanten/k anten-von-der-rolle/hirnholzkanten.html [retrieved on 2018-01-18]
- POLYKARP SCHNELL: , 31 December 2010 (2010-12-31), Retrieved from the Internet: URL:http://www.polykarp.de/fileadmin/user_ upload/pdf/TM-Hirnholz-deutsch.pdf [retrieved on 2018-01-18]

## Description

### TECHNICAL FIELD OF INVENTION

The present invention refers to a process of production of an end-grained edge banding according to the preamble of independent claim 1 and to an end-grained wood veneer edge banding according to the preamble of claim 5. Such a process and such an edge banding are known from the document IT PN20120037.

### BACKGROUND OF THE INVENTION

Normally, in the furniture field, furniture pieces are made by assembling panels, for example wood panels, by means of various types of fastening means. Generally, for technical and economic reasons, the panels used are not made of solid wood, but are formed instead of less valued materials, such as chipboard, or made up of chips resulting from the waste from normal woodworking processes suitably kneaded with bonding materials, such as glues, and subsequently pressed, or they can be made of hardboard, plywood, or MDF.

The thus formed panels are then finished and made aesthetically attractive through the application of prized wood veneer on the exposed external surfaces, commonly called edges.

Generally, said edges are made by slicing logs longitudinally, that is along planes parallel to the natural grain of the logs: thus are obtained sheets having a thickness of 0,4 to 3 mm that are then glued in a linear succession on a support and finally wound in reels of standardized length to allow them to be easily stored, carried and applied in industrial processes.

When they are to be used, said edges are unwound and applied, usually by gluing, on the surfaces of panels or other articles that are to be veneered.

Although the panels veneered with the conventional edges described above have generally a satisfactory appearance, their application on the edge-grained surfaces of a panel, that is, on the transversal cross sections of the same, makes it evident that such a panel is not made of solid wood.

A well-known process for obtaining end-grained edges suitable to simulate the solid-wood effect consists of preparing a plurality of solid-wood panels, of equal length and thickness, stacked and bonded on each other; these stacked boards are then sliced transversally to the lengthwise extension of the panels, to obtain a plurality of "head" blocks or modular elements, that is, with a reproduction of the grain transversally to the normal grain of the wood, to obtain the desired appearance.

Similarly to the process for obtaining the conventional edges, these modular head elements are then paired together in a linear succession and glued on a support, generally a wood support, to form a continuous edge that can be wound in reels.

Clearly, all the modular head elements that can be obtained with the above procedure have the same dimensions, and in particular a maximum width of about 30 - 50 mm (that is, the same as the thickness of the starting panels), as greater thicknesses would require larger cutting machine tools which, in addition to producing a substantial amount of waste, would involve considerable investments that are not proportionate to the possible advantages, thus making the process uneconomical.

To lend a more natural effect to the end-grained edge it would be desirable to obtain end-grained edges of variable length, possibly also longer than 50 mm, and however meeting the requirements of the customer.

Furthermore, a significant problem seen in end-grained edges obtained from stacked boards is basically tied to the fact that the absorption of the bonding agent of an end-grained veneer is completely different from that of the wood veneers conventionally used to form the longitudinal edges, and this makes it particularly complicated to carry out the steps of bonding the end-grained elements to the relative support.

In this regard, it was seen that the only bonding agent capable of providing an adequate bonding level of said modular elements to the support is a vinyl-based bonding agent; this type of glue has however the disadvantage, appreciated in the field, of softening at somewhat low temperatures, preventing as a consequence the use of such end-grained edges to line panels suitable for application in warm environments, such as for example kitchens and bathrooms.

Moreover, since wood is a living material, it can be deformed or altered by some external agents to which it is exposed, such as in particular changes in temperature and humidity; for this reason, when the production process is being carried out and in the storage phase, the material must be superficially protected through the application of a protection film, which however does not offer sufficient guarantees of moisture-tightness, and in any case must be removed before the varnishing step, thereby implying the addition of a further processing step, with the consequent increase of production costs.

Finally, due again to the peculiarity of the material being used, even when the end-grained edge is applied to furniture pieces arranged in environments such as kitchens and bathrooms, it undergoes deformations due to the action of moisture and changes in temperature, which sometimes lead to the occurrence of undesirable cracks and evident ungluing from the support.

Also known is a different process for making end-grained edges suitable to be applied to a head portion of a panel of a furniture piece to create the "solid wood" effect on the same furniture, that can at least partially solve the above-mentioned problems. In particular, the process comprises the steps of:
- providing a plurality of end-grained slices obtained by slicing a log along planes transversal to the natural direction of the wood grain;
- cutting each of said plurality of end-grained slices so as to form a plurality of essentially bi-dimensional modular elements having a thickness smaller than the other dimensions and equal to the thickness of the slices from which they are obtained, and having at least one common dimension that is equal to the width of the reel;
- coupling said plurality of modular elements in a linear succession to a first support layer;
- coupling one or more second support layers on said linear succession of modular elements on the side opposite to the side where said first support layer is applied;
- removing said first support layer together with a surface layer of the material forming said modular elements, and
- winding in a reel the end-grained edge obtained.

In particular, the coupling of the modular elements to the first support layer is carried out by gluing, and said first support layer is preferably made of fabric or paper to provide the strength required for the subsequent processes.

The application of said one or more second support layer, made for example of composite wooden material, veneered natural wood or polymeric material, such as for example ABS or PVC, also on the surface of said modular elements not involved in the coupling with said first support layer is carried out by gluing.

This process makes it possible to obtain improved end-grained edges with respect to those that can be obtained with prior conventional processes; however, the use of customary bonding agents, in particular vinyl glue, in the usual amounts does not make it possible to obtain a durable and reliable coupling.

To avoid this problem, it was attempted to increase the quantity of bonding agent to use, without however obtaining the desired results: in such a case, in fact, it was afterward necessary to trim the edges to remove the excess glue squeezed out at the sides. In addition, the use of the vinyl glue and the peculiarity of the natural material used - that is, the end-grained wood - entrain the same problems already seen in the end-grained edges obtained with the conventional processes, that is, the impossibility of using them in environments characterized by high temperatures and humidity, such as kitchens and bathrooms.

The main objective of the present invention is to overcome the drawbacks of the prior art, by providing an improved end-grained edge, and an improved process for obtaining it, which can be used in environments characterized by high temperature and humidity, such as kitchens and bathrooms, guaranteeing maximum tightness without compromising the gluing thereof.

Another objective of the present invention consists of providing an improved end-grained edge that does not require the application of protective films on its surface during the various steps of production or storage.

A further objective of the present invention is to provide an improved process of production of end-grained edges having an appearance and feel as natural as possible.

A further objective of the present invention is to propose an improved process for making end-grained edges than can be easily implemented at an industrial level.

One not least important objective is to devise an improved process of making end-grained edges that achieves the above-mentioned purpose and objectives by employing the usual and well-known machines and equipment.

The above objective, purposes and advantages, as well as others that will become more evident in the following description, are achieved with an improved end-grained edge and an improved process for obtaining it, as defined in claims 1 and 5.

### BRIEF DESCRIPTION OF THE FIGURES

Further characteristics and advantages of an end-grained edge according to the present invention will become more evident from the following description of particular, but not exclusive, embodiments, illustrated purely by way of non-limiting example with reference to the following figures:
- figure 1A illustrates, in a transversal cross section, an end-grained edge according to the present invention;
- figure 1B is a top view of the edge of the previous figure, in which can be seen the typical aesthetic effect of an end-grained edge;
- figure 2 is a side view of a log during one step of the process according to the present invention;
- figure 3 is a front view of an end-grained slice obtained from the log of the previous figure;
- figure 4 illustrates schematically some steps of an improved process according to the present invention, and
- figures 5, 6 and 7 are schematic views of coupled modular elements obtained in intermediate steps of the improved process of the present invention in transversal cross section.

### DETAILED DESCRIPTION OF THE EMBODIMENTS OF THE INVENTION

With reference to the above-mentioned figures, number 1 indicates an "end-grained edge", that is, a coupling of modular elements suitable to be used to line panels or articles, applied in particular on transversal cross sections of the same so as to create a "solid wood" effect.

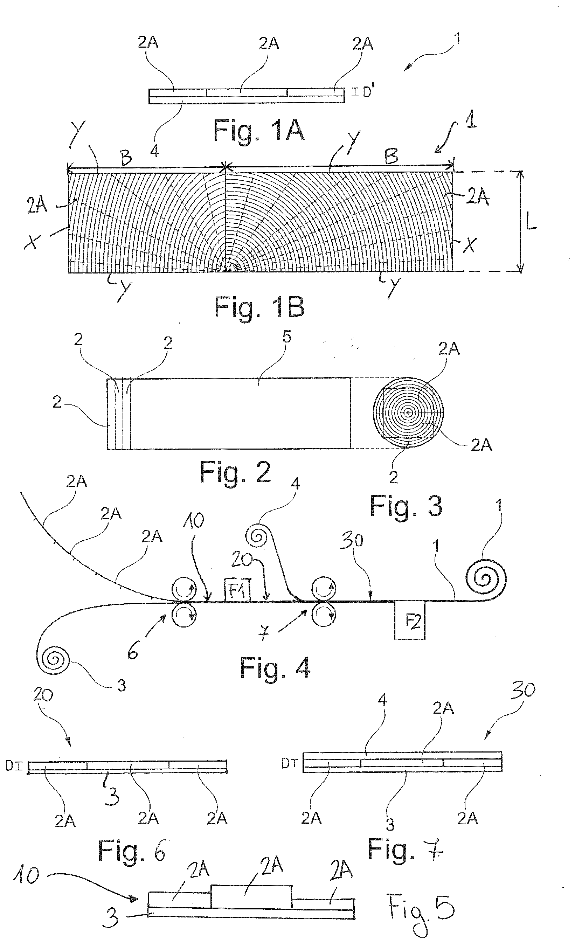

The steps for making an end-grained edge 1 according to the invention are described below. As shown in figure 2, a plurality of end-grained sheets or slices 2, having a variable thickness of about 0.5 to 3 mm, is obtained by slicing with suitable well-known means a log 5 along planes transversal to the direction of the wood grain of the same log.

Preferably, if the log 5 has a somewhat large diameter, it may be convenient to saw it lengthwise into a number of portions, and obtain from them a plurality of slices 2 as previously illustrated for each portion.

Alternatively, said end-grained slices 2 can be obtained by arranging a plurality of solid-wood panels, of equal length and thickness, stacked and glued on one another to "recreate" a log, and slicing these boards transversely with respect to the lengthwise extension of the panels so as to obtain a plurality of "end grained" blocks or modular elements.

It should be pointed out that the end-grained wooden slices 2 thus obtained are extremely fragile and scarcely flexible; this makes it quite difficult to subject them to industrial woodworking processes. Moreover, due to the fragility of the material, the cutting precision of the normal woodworking equipment used does not allow it to obtain end-grained slices 2 of uniform thickness.

As shown in figure 3, each of said plurality of end-grained slices 2 obtained in this manner is subsequently cut so as to form a plurality of modular elements 2A, essentially bi-dimensional and preferably of rectangular shape; in other words, said modular elements 2A have a rather limited and variable thickness with respect to the other two dimensions B, L, in particular coinciding with the thickness of the end-grained slice 2 from which they are obtained.

As shown in figure 1B, said modular elements have an essentially rectangular, or also a square shape, formed by means for cutting to length or with other known equipment, and have at least one first pair of parallel sides X having an equal first dimension, coinciding for example with the width L of the final reel, and a second pair of parallel sides Y, having a second dimension B which may be variable, depending on the diametrical position from which said modular elements 2A are obtained on the slice 2, thus allowing an optimal use of the end-grained slice 2 and limiting the production of waste.

The subsequent steps of an improved process of production of end-grained edges according to the present invention are shown schematically in figure 4. Said modular elements 2A are arranged in a linear succession, preferably by joining with hot glue each element 2A with the subsequent element through said first pair of parallel sides X, and connecting by gluing to a first support layer 3, having substantially the same length L as said modular elements 2A to obtain a first intermediate modular paired element 10, as shown in figure 5.

Alternatively, said modular elements 2A are connected individually by gluing to a relative portion of said first support layer 3, to obtain a first intermediate modular paired element 10, and subsequently they are joined together to form a linear progression.

According to an embodiment of the invention, said first support layer 3 is preferably made of fabric or paper, and is adapted to provide to the sequence of modular elements 2A coupled to it the necessary strength for the subsequent processes. The coupling of said first support layer 3 to said linear sequence of modular elements 2A can be carried out either, as shown schematically in figure 4, through the simultaneous passage between a pair of first pressure rollers 6, or also by providing said first support 3 to each individual element 2A to form said first coupled intermediate member 10, and subsequently by arranging said first coupled intermediate members 10 in a linear succession. Alternatively, this step can be carried out in a press.

Preferably, the bonding agent used in this step is a polyurethane-based, a polyolefin-based or a urea-based glue.

As can be seen in figure 5, due to the variable thicknesses of said modular elements 2A, said first coupled intermediate members 10 have a surface that is rather uneven on the wood side, that is, on the surface of said modular elements 2A that is not coupled to said first support layer 3.

According to a peculiar characteristic of the invention, the surface on the wood side of said first coupled intermediate element 10 can advantageously be put through a smoothing step by passing it through a first tool F1, such as a plane or a calibrating machine, thanks to which it is made even, essentially levelling it to a desired thickness D the thickness of said modular elements 2A, and thus obtaining a second coupled intermediate member 20, illustrated in figure 6.

Subsequently, at least a second support layer 4, also having a length L, is coupled, preferably by gluing, in particular through the use of a polyurethane- or polyolefin- or urea-based glue, on the surface of said modular elements 2A not coupled to said first support layer 3, so as to give the necessary elasticity and flexibility to the intermediate member.

Preferably, said second support layer 4 can be formed from a material commonly known as "pre-composite", that is, a material obtained by gluing various sheets of second-grade wood together and then blanking them. Alternatively, said second support layer can be made from natural veneered wood or polymeric material, such as ABS or PVC.

If necessary, a plurality of second support layers 4 can be coupled to said second coupled intermediate member 20 to obtain a desired overall final thickness.

The mating of said one or more second support layers 4 and said linear succession of modular elements 2A can be carried out, as shown schematically in figure 4, by simultaneously passing them between a pair of second pressure rolls 7; alternatively, this step can be carried out on a press.

Advantageously, the surface evenness of said second coupled intermediate member 20, achieved thanks to the action of said first tool F1 on the wood side, makes it possible to obtain an optimal coupling with said second support layer 4, guaranteeing the same bonding level of all the modular elements 2A and making it possible to meter out the exact amount of glue to use, without waste, and without requiring a further trimming step.

In this manner, it was possible to form a third coupled intermediate member 30, shown in figure 7, in which the modular elements 2A are enclosed between said first support layer 3 and said at least one second support layer 4.

The subsequent step consists of removing, with a suitable second woodworking tool F2, such as a plane or a calibrating machine, said first support layer 3 that is now no longer necessary. To avoid having residual bonding material remaining on the face of the modular elements 2A, advantageously, a thin surface layer of the material forming said modular elements 2A is also removed at the same time as the removal of said first support layer 3.

Downstream of said second woodworking tool F2 will thus be obtained an end-grained edge 1 comprising a linear succession of modular elements 2A having a smaller thickness D' with respect to the thickness D obtained after the passage through said first planing tool F1, whose surface will reproduce the aesthetic design desired to create the solid-wood effect, bonded at the opposite surface with polyurethane-based, polyolefin-based or urea-based glue, thus suitable to guarantee an optimal air-tightness even in environments characterized by high temperature and humidity, to at least one second support layer 4 which, as mentioned above, is preferably formed of pre-composite wood, or natural wood veneer or polymeric material, such as ABS or PVC.

If necessary, the reel obtained can be appropriately cut longitudinally to obtain edges having a desired standard width.

It should be pointed out that, from experimental tests it was found that the coupling of said at least one second support layer 4 in contact with said first support layer 3 instead of being in contact with the wooden end-grained modular elements 2A is not optimal; in fact undesirable detachments tend to occur.

Advantageously, by applying the procedure according to the invention it is possible to couple said at least one second support layer 4 directly in contact with the surface of modular elements 2A and with polyurethane glue, or polyolefin glue, or urea glue, without the presence of intermediate layers, giving the edge the desired mechanical strength, flexibility and elasticity required to wind it on a reel and to apply it on the surface of panels, and ensuring an excellent air and moisture tightness even in conditions of high temperature and high levels of humidity.

Summing up, an improved process for the production of end-grained edges 1 suitable to be applied to a portion of a manufactured article comprises the steps of:
a) providing a plurality of end-grained slices 2 obtained by slicing a log 5 or stacked boards along planes transversal to the natural direction of the wood grain;
b) cutting each one of said plurality of end-grained slices 2 so as to form a plurality of modular elements 2A;
c) coupling said plurality of modular elements 2A by gluing them to a first support layer 3 to obtain a first coupled intermediate modular member 10;
c') smoothing said first intermediate modular member 10 on the side of said modular elements 2A that is not coupled to said first support layer 3 so as to make its thickness even;
d) gluing at least a second support layer 4 on said modular elements 2A arranged in linear succession to the side opposite the side on which said first support layer 3 is applied;
e) removing said first support layer 3 together with a surface layer of the material forming said modular elements 2A, and finally,
f) winding on a reel the end-grained edge 1 thus obtained.

As mentioned above, the coupling with said at least one second support layer 4 is necessary to provide the edge with the flexibility and elasticity required, both for the subsequent step of winding it into a reel, and also for the subsequent step of application to the panels. On the other hand, said first support layer 3 is suitable to provide the strength necessary to carry out the coupling with said at least one secondary support layer 4.

In particular, through experimental tests it was advantageously established that the preferable bonding agent for joining said modular elements 2A and said at least one second support layer 4 in said step d) is polyurethane glue, polyolefin glue or urea glue; this, in addition to providing optimum sealing has also the advantage of guaranteeing the use of the end-grained edges produced in this manner in environments characterized by high temperatures, such as for example kitchens, avoiding the occurrence of detachments and unsightly cracks.

In practice, the result of the above process is thus an end-grained edge 1 comprising at least one portion of a modular end-grained element 2A, preferably made from prized wood, or natural veneer or polymeric material, through which said edge 1 can be coupled to the surface of the manufactured article or panel to be lined.

Finally, it can be seen how, if necessary, in an alternative embodiment of the present invention, the end-grained edge 1 can be made by gluing said modular elements 2A directly on said one or more second support layers 4 with a polyurethane-based, or polyolefin-based or urea-based glue, without therefore applying the improved process illustrated above, and still achieve satisfactory results.

In conclusion, from the above it is evident how the present invention achieves the initially foreseen purposes and advantages. In effect, an improved end-grained edge 1 was devised, which, thanks to the use of a polyurethane-based or polyolefin-based or urea-based glue for coupling modular end-grained elements 2A and the support layer, is able to withstand the strains due to the movements that occur within the wood, caused by external agents, both during the steps of production of the end-grained edge and also after its application on panels to be lined, thus preventing the occurrence of cracks or unglued parts.

Advantageously, a process for the production of end-grained edges was also proposed, which, thanks to the provision of a further smoothing step with respect to the production process of the prior art, makes it possible to solve the problems relative to the imperfect coupling between the wooden slices 2 and the second support layer 4, thus guaranteeing maximum tightness without waste of glue and without requiring subsequent finishing operations.

Moreover, advantageously, thanks to the double smoothing/calibration undergone by the modular elements 2A, and to the anchoring to the support with polyurethane, or polyolefin or ureic glue, said elements have such a reduced thickness that, even if they are exposed to external agents, such as, in particular, variations in temperature and humidity, they suffer no deformation. For this reason, the end-grained edge 1 obtained in this manner can be processed and stored without requiring a protective backing film such as is generally provided specifically to try to avoid the problems illustrated above.

Advantageously, the end-grained edges 1 obtained with the improved method illustrated above may include modular elements 2A having a variable dimension B, that may be even larger than 50 mm, contributing in this manner to giving a natural aesthetic appearance to the manufactured articles to which they are applied.

Naturally, the invention is susceptible to many modifications or variants, without thereby departing from the scope of patent protection of the present invention as defined by any of the enclosed claims.

Furthermore, the materials used to implement the present invention, as well as the shapes and dimensions of the individual components, may be the most appropriate to the specific requirements.

## Claims

1. Process for producing end-grained wood veneer edge banding (1) adapted to be applied on at least a head portion of a panel of a furniture piece to simulate a solid-wood effect, comprising the steps of:
a) providing a plurality of end-grained slices (2);
b) cutting each of said plurality of end-grained slices (2) so as to form a plurality of essentially bi-dimensional modular elements (2A);
c) coupling said plurality of modular elements (2A) to a first support layer (3) to obtain a first intermediate member (10);
d) coupling one or more second support layers (4) with said modular elements (2A) arranged according a linear succession, on a side opposite to the side where said first support layer (3) is disposed;
e) removing with a tool (F2) said first support layer (3) together with a surface layer of the material forming said modular elements (2A);
**characterized in that** between said step c) and said step d), a step c') of smoothing said first intermediate member (10) on the side of said modular elements (2A) which is not coupled with said first support layer (3) is provided.

2. Process according to claim 1, wherein the coupling between said modular elements (2A) and said at least one second support layer (4) is obtained through a bonding agent selected from a polyurethane-based glue, a polyolefin-based glue or an urea-based glue.

3. Process according to claim 1 or 2, wherein said first support layer (3) is made of a material selected from fabric or paper.

4. Process according to any one of claims 1 to 3, wherein said at least a second support layer (4) is made of a material selected from wood or polymeric material.

5. End-grained wood veneer edge banding (1) adapted to be applied on at least a head portion of a panel of a furniture piece to simulate a solid-wood effect, said edge banding (1) being formed by a plurality of essentially bi-dimensional modular elements (2A) of end-grained slice (2) joined together according to a linear succession and coupled, with a side, to at least one support layer (4) through a bonding agent, **characterized in that** said first side of said plurality of essentially bi-dimensional modular elements (2A) and a second side, opposite to said first side, are both smoothed and wherein said bonding agent is selected from a polyurethane-based glue, a polyolefin-based glue or an urea-based glue.

6. End-grained wood veneer edge banding (1) according to claim 5, wherein said modular elements (2A) have essentially rectangular shape formed by a first pair of parallel sides (X), whereby said modular elements (2A) are joined to each other and having a same first length (L), and a second pair of parallel sides (Y) having a second length (B) which is variable.

7. End-grained wood veneer edge banding (1) according to claim 5 to 6, wherein said at least one support layer (4) is made of a material selected from wood or polymeric material.

## Patentansprüche

1. Prozess zur Herstellung einer Holzfurnierkantenrandleiste mit Endfaser (1), die ausgebildet ist, auf zumindest einem Oberseitenbereich einer Platte eines Möbelstücks aufgebracht zu werden, um eine Vollholzwirkung zu simulieren, mit den Schritten:
a) Bereitstellen mehrerer Schichten mit Endfasern (2);
b) Schneiden jeder der mehreren Schichten mit Endfasern (2) derart, dass mehrere im Wesentlichen zweidimensionale modulare Elemente (2A) gebildet werden;
c) Verbinden der mehreren modularen Elemente (2A) mit einer ersten Trägerschicht (3), um ein erstes Zwischenelement (10) zu erhalten;
d) Verbinden einer oder mehrerer zweiter Trägerschichten (4) mit den modularen Elementen (2A), die in linearer Aufeinanderfolge angeordnet sind, auf einer Seite gegenüberliegend zu der Seite, auf der die erste Trägerschicht (3) angeordnet ist;
e) Entfernen der ersten Trägerschicht (3) zusammen mit einer Oberflächenschicht des die modularen Elemente (2A) bildenden Materials mit einem Werkzeug (F2);
**dadurch gekennzeichnet, dass**
zwischen dem Schritt c) und dem Schritt d) ein Schritt c') ausgeführt wird zum Glätten des ersten Zwischenelements (10) auf der Seite der modularen Elemente (2A), die nicht mit der ersten Trägerschicht (3) verbunden ist.

2. Prozess nach Anspruch 1, wobei das Verbinden der modularen Elemente (2A) mit der mindestens einen zweiten Trägerschicht (4) durch ein Bindemittel erreicht wird, das ausgewählt ist aus: Kleber auf Polyurethanbasis, Kleber auf Polyolefinbasis oder Kleber auf Harnstoffbasis.

3. Prozess nach Anspruch 1 oder 2, wobei die erste Trägerschicht (3) aus einem Material, das aus Stoff oder Papier ausgewählt ist, hergestellt ist.

4. Prozess nach einem der Ansprüche 1 bis 3, wobei die mindestens eine Trägerschicht (4) aus einem Material hergestellt ist, das ausgewählt ist aus Holz oder einem Polymermaterial.

5. Holzfurnierkantenrandleiste mit Endfasern (1), die ausgebildet ist, zumindest auf einem Oberseitenbereich einer Platte eines Möbelstücks aufgebracht zu werden, um eine Vollholzwirkung zu simulieren, wobei die Kantenrandleiste (1) durch mehrere im Wesentlichen zweidimensionale modulare Elemente (2A) aus Schichten mit Endfaser (2) gebildet ist, die gemäß einer linearen Aneinanderreihung miteinander verbunden sind und mit einer ersten Seite mit mindestens einer Trägerschicht (4) durch ein Bindemittel verbunden sind,
**dadurch gekennzeichnet, dass**
die erste Seite der mehreren im Wesentlichen zweidimensionalen modularen Elemente (2A) und eine zweite Seite, die der ersten Seite gegenüberliegt, jeweils geglättet sind und wobei das Bindemittel ausgewählt ist aus: Kleber auf Polyurethanbasis, Kleber auf Polyolefinbasis oder Kleber auf Harnstoffbasis.

6. Holzfurnierkantenrandleiste mit Endfaser (1) nach Anspruch 5, wobei die modularen Elemente (2A) im Wesentlichen eine rechteckige Form haben, die durch ein erstes Paar aus parallelen Seiten (X) gebildet ist, wobei die modularen Elemente (2A) miteinander verbunden sind und eine gleiche erste Länge (L) haben, und durch ein zweites Paar aus parallelen Seiten (Y) gebildet ist, die eine zweite Länge (B) haben, die variabel ist.

7. Holzfurnierkantenrandleiste mit Endfaser (1) nach Anspruch 5 oder 6, wobei die mindestens eine Trägerschicht (4) aus einem Material hergestellt ist, das ausgewählt ist aus Holz oder einem Polymermaterial.

## Revendications

1. Procédé de fabrication de bande de bord (1) en placage de bois de bout adapté pour être appliqué sur au moins une partie de tête d'un panneau d'une pièce de mobilier simulant un effet de bois massif, comprenant les étapes consistant à :
a) fournir une pluralité de tranches (2) de bout ;
b) couper chacune de ladite pluralité de tranches (2) de bout de manière à former une pluralité d'éléments modulaires (2A) essentiellement bidimensionnels ;
c) coupler ladite pluralité d'éléments modulaires (2A) à une première couche de support (3) pour obtenir un premier élément intermédiaire (10) ;
d) coupler une ou plusieurs secondes couches de support (4) avec lesdits éléments modulaires (2A) agencés selon une succession linéaire, sur un côté opposé au côté où ladite première couche de support (3) est disposée ;
e) retirer avec un outils (F2) ladite première couche de support (3) en même temps qu'une couche de surface du matériau formant lesdits éléments modulaires (2A), **caractérisé en ce que**, entre ladite étape c) et ladite étape d), une étape c') de lissage dudit premier élément intermédiaire (10) du côté desdits éléments modulaires (2A) qui n'est pas couplé à ladite première couche de support (3) est prévue.

2. Procédé selon la revendication 1, dans lequel le couplage entre lesdits éléments modulaires (2A) et ladite au moins une seconde couche de support (4) est obtenu par l'intermédiaire d'un agent de liaison choisi parmi une colle à base de polyuréthane, une colle à base de polyoléfine ou une colle à base d'urée.

3. Procédé selon la revendication 1 ou 2, dans lequel ladite première couche de support (3) est constituée d'un matériau choisi parmi du tissu ou du papier.

4. Procédé selon l'une quelconque des revendications 1 à 3, dans lequel ladite au moins une seconde couche de support (4) est constituée d'un matériau choisi parmi du bois ou un matériau polymère.

5. Bande de bord (1) en placage de bois de bout adapté pour être appliqué sur au moins une partie de tête d'un panneau d'une pièce de mobilier simulant un effet de bois massif, ladite bande de bord (1) étant formée par une pluralité d'éléments modulaires (2A) essentiellement bidimensionnels de tranches (2) de bout reliés entre eux selon une succession linéaire et couplés, avec un coté, à au moins une couche de support (4) par un agent de liaison, **caractérisée en ce que** ledit premier coté de ladite pluralité d'éléments modulaires (2A) essentiellement bidimensionnels et un second coté, opposé audit premier coté, sont tous les deux lissés et dans laquelle ledit agent de liaison est choisi parmi une colle à base de polyuréthane, une colle à base de polyoléfine ou une colle à base d'urée.

6. Bande de bord (1) en placage de bois de bout selon la revendication 5, dans laquelle lesdits éléments modulaires (2A) ont une forme essentiellement rectangulaire formée par une première paire de côtés parallèles (X), de sorte que lesdits éléments modulaires (2A) sont reliés l'un à l'autre et ont une même première longueur (L), et une seconde paire de côtés parallèles (Y) ayant une seconde longueur (B) qui est variable.

7. Bande de bord (1) en placage de bois de bout selon la revendication 5 à 6, dans laquelle ladite au moins une couche de support (4) est constituée d'un matériau choisi parmi du bois ou un matériau polymère.
